# EUROPEAN PATENT SPECIFICATION

(11) **EP 2 412 591 B1**
(45) Date of publication and mention of the grant of the patent: **27.03.2019**
(21) Application number: 11175217.6
(22) Date of filing: 25.07.2011
(51) Int. Cl.: B60T 7/10, B60T 7/08

(54) **Work vehicle brake**
Nutzfahrzeugbremse
Frein de véhicule utilitaire

(30) Priority: 28.07.2010 JP 2010169591
(43) Date of publication of application: 01.02.2012
(73) Proprietor: Kubota Corporation, Osaka 556-8601 (JP)
(72) Inventor: Togo, Manabu, OSAKA, Osaka 5900823 (JP)
(74) Representative: Lemcke, Brommer & Partner Patentanwälte Partnerschaft mbB

(56) References cited:
- EP-A1- 1 588 914
- CA-C- 1 329 560
- US-A- 4 759 417
- US-A1- 2004 074 692

## Description

### Background of the invention

### Field of the invention

The present invention relates to a work vehicle including: a transmission case forming a vehicle body; a driver's seat provided above the transmission case; a rear wheel drive case extending outward in a transverse direction of the vehicle body from the transmission case; a rear wheel disposed on an end part of the rear wheel drive case; a rear wheel fender which is provided on a lateral side of the driver's seat, and extends in a longitudinal direction of the vehicle body above the rear wheel; a parking brake provided in the transmission case; and a brake operation tool for operating the parking brake, provided in the vicinity of the driver's seat.

### Description of the related art

For the work vehicle as described above, there can be mentioned a tractor described in, for example, Japanese Unexamined Patent Application Publication No. 11-321594.

This tractor includes: a hand brake as parking brake; and a parking brake pedal as brake operation tool.

For example, there are some cases where an engine automatic stopping device is provided which is configured to automatically stop an engine when a worker leaves the driver's seat with the engine running, and further, an engine stop blocking device is provided which is configured, when the parking brake is put into an on-state, to prevent the engine automatic stopping device from working and thus keep the engine running even though the worker leaves the driver's seat. In a case where the on-state of the parking brake is detected by an action of the detection switch on an operation system of the parking brake, for example, by an action of the detection switch on a member constituting the operation system of the parking brake at a position under a floor of the driving part, there is a possibility that mud or grass may come into contact with or attach to the detection switch, especially during a working traveling.

US 2004 / 0 074 692 A1 discloses an interlock of parking brake and drive control pedals for a utility vehicle, such as a lawn and garden tractor.

### Summary of the invention

Accordingly, it is desirable to provide a work vehicle in which such a possibility is reduced while the mechanism is used in which the detector is applied to the operation system of the parking brake.

In one aspect of the present invention, there is provided a work vehicle of the above-describe type including: an interlocking mechanism for transmitting an operational displacement of the brake operation tool to the parking brake is disposed along a lateral face of the transmission case, and a detector for detecting a movement of a moving body configured to move in accordance with the operational displacement in the interlocking mechanism is disposed in a space having right and left lateral faces and a bottom face defined by the rear wheel fender, the transmission case and the rear wheel drive case,

According to this configuration, when the parking brake is put to an on-state by the brake operation tool and the moving body is put to the swing position corresponding to the on-state of the parking brake, the detector detects the swing position of the moving body as the on-state of the parking brake. In addition, even though grass or splashed mud is present, the rear wheel drive case or the rear wheel fender can block them under or on a lateral side of the detector so as to prevent grass or mud from attaching or contacting to the detector.

Therefore, while the operation state of the parking brake can be detected by the action of the detector on the interlocking mechanism constituting the operation system of the parking brake, the detection accuracy and usable life of the detector can be improved.

One simple embodiment of the moving body is a swing interlocking member which can transmit the operational displacement by means of swing displacement. In other words, the moving body is a swing interlocking member swingable in the longitudinal direction of the vehicle body in accordance with the operational displacement.

In one preferred embodiment of the present invention, the detector and the brake operation tool may be supported on the transmission case through the same support part. With this configuration, even though the brake operation tool and the detector have simple structure, they can be stably mounted on the support part.

In another preferred embodiment of the present invention, a mounting member for fixing the detector to the support part may include: a support piece extending under a detecting head of the detector from the support part; and a connecting piece which is standing on a distal extending end of the support piece and is connected to a case portion of the detector. According to this configuration, the support piece blocks mud and grass under the detecting portion of the detector, and thus mud and grass are unlikely to attach to the detecting head.

In still another preferred embodiment of the present invention, the detector is a contact type detection switch, and when the parking brake is in an off-state, the moving body is brought into contact with a detecting head of the detection switch, and when the parking brake is in an on-state, the moving body is away from the detecting head of the detection switch.

The displacement position (swing position) of the moving body (swing interlocking member) corresponding to the on-state of the parking brake is susceptible to change due to abrasion occurring with the use of the parking brake. As a result, in a case where the parking brake is in the on-state and the moving body (swing interlocking member) is brought into contact with the detection switch, as the parking brake is used, the moving body (swing interlocking member) is likely to be excessively brought into contact with the detection switch. According to the present configuration, when the parking brake is in the off-state, the moving body (swing interlocking member) is brought into contact with the detection switch, and when the parking brake is in the on-state, the moving body (swing interlocking member) is away from the detection switch. Therefore, even when the swing position of the moving body (swing interlocking member) corresponding to the on-state of the parking brake is changed, the swing position of the moving body (swing interlocking member) for actuating the detection of the detection switch is unlikely to change, and thus the moving body (swing interlocking member) is unlikely to be excessively brought into contact with the detection switch.

### Brief description of the drawings

Fig. 1 is a side view showing an entire tractor.
Fig. 2 is a plan view showing the entire tractor.
Fig. 3 is a plan view showing a structure for brake operation.
Fig. 4 is a side view showing the structure for brake operation.
Fig. 5 is a side view illustrating an on-state of a traveling brake (parking brake).
Fig. 6 is a rear view showing a part where a detection switch is disposed.
Fig. 7 is a plan view showing the part where the detection switch is disposed.
Fig. 8 is a transversal horizontal sectional plan view showing a connection structure between a swing interlocking member and the interlocking rod.
Fig. 9 is a plan view showing operation positions of a PTO selection lever.
Fig. 10 is a side view showing the operation positions of the PTO selection lever.
Fig. 11 is an electric circuit diagram showing an engine start blocking device, an engine automatic stopping device and an engine stop blocking device.
Fig. 12 is a side view showing a brake operation tool according to another embodiment.
Fig. 13 is a front view showing the brake operation tool according to another embodiment.

### Detailed description of the preferred embodiments

Hereinbelow, embodiments of the present invention will be described with reference to the drawings. It should be noted that directions "right" and "left" used herein means those seen from a person seated on the driver's seat.

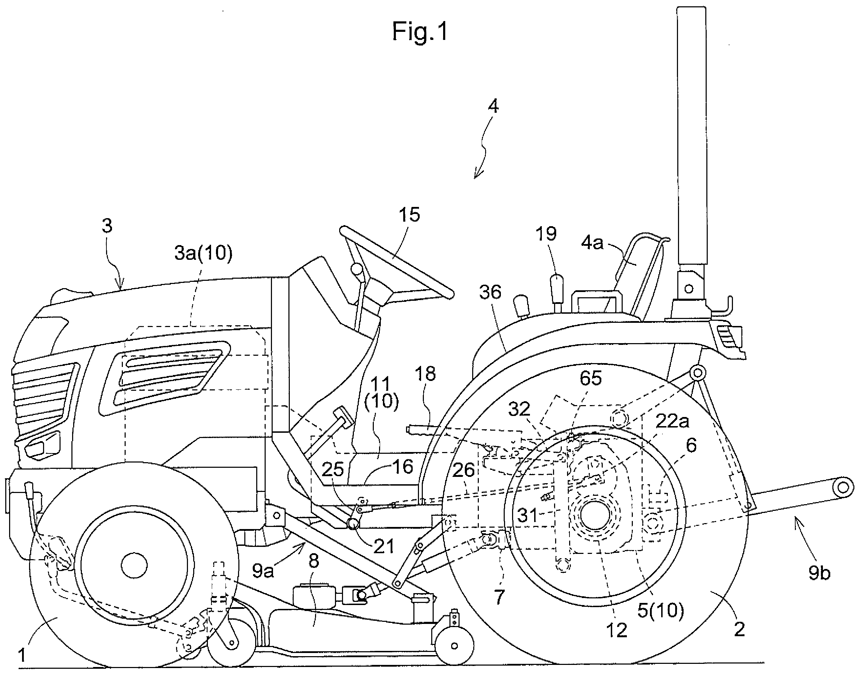

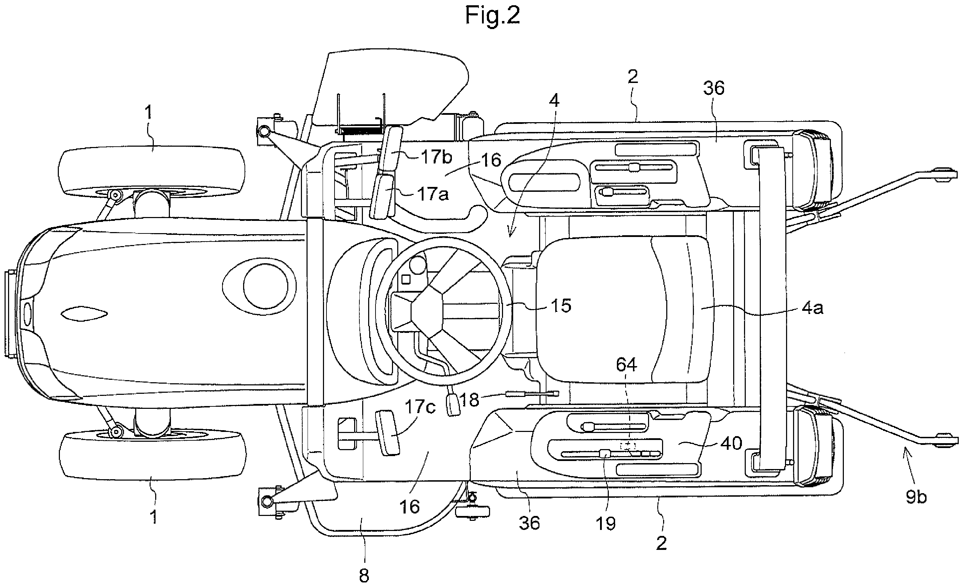

Fig. 1 is a side view showing an entire tractor as one example of the work vehicle according to one embodiment of the present invention. Fig. 2 is a plan view showing the entire tractor according to the embodiment of the present invention. As shown in these drawings, the tractor according to the embodiment of the present invention is a self-propelled vehicle including: a pair of right and left drivable and steerable front wheels 1,1; a pair of right and left drivable rear wheels 2,2; a motor part 3 disposed in a front part of a vehicle body; and a driving part 4 disposed in a rear part of the vehicle body. The tractor is provided with a power take off shaft 6 (hereinbelow, referred to as "rear PTO 6") disposed in a rear part of a transmission case 5 positioned in the rear part of the vehicle body, and a power take off shaft 7 (hereinbelow, referred to as "mid PTO 7") disposed in a lower portion of the transmission case 5.

The tractor may be used as various kinds of riding type work machine by liftably and drivably connecting various working devices. For example, as shown in Fig. 1, the tractor may be used as a riding type mower, by liftably connecting a mower 8 through a link mechanism 9a to the self-propelled vehicle body between the front wheels and the rear wheels and allowing a driving force of an engine 3a disposed in the motor part 3 to be transmitted from the mid PTO 7 to the mower 8. The tractor may be used as a riding type tiller, by liftably connecting a rotary tilling device (not shown) through a link mechanism 9b to the rear part of the self-propelled vehicle body and allowing a driving force of the engine 3a to be transmitted from the rear PTO 6 to the rotary tilling device.

A body frame 10 of the self-propelled vehicle is formed of: the engine 3a disposed in the motor part 3; a main frame 11 which is connected to a lower part of the engine 3a and extending in a longitudinal direction of the vehicle body; and the transmission case 5 connected to a rear part of the main frame 11.

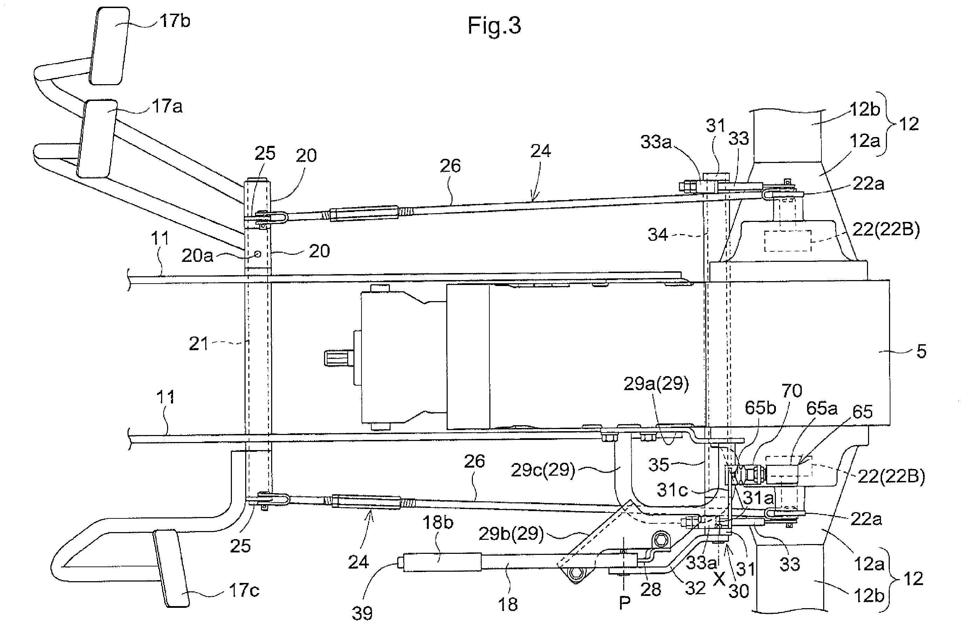

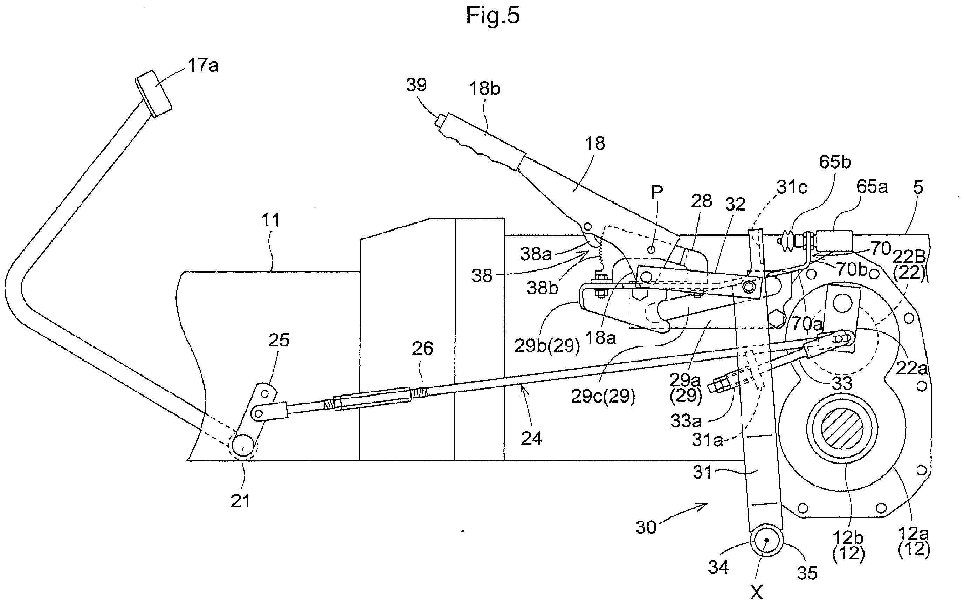

As shown in Figs. 3 and 5, the body frame 10 is provided with a pair of right and left rear wheel drive cases 12,12 flanking the transmission case 5 in such a manner that each case 12 extends outward from a corresponding lateral side of the transmission case 5 in a transversal direction of the vehicle body, and each rear wheel drive case 12 supports the corresponding rear wheel 2 through a rear axle. The rear wheel drive case 12 includes: a base end side case 12a formed integrally with a lateral wall of the transmission case 5; and a distal end side case 12b whose one end is detachably connected to the base end side case 12a.

As shown in Figs. 1 and 2, the driving part 4 includes: a driver's seat 4a provided above the transmission case 5; a steeling wheel 15 provided frontward of the driver's seat 4a; a pair of left and right brake pedals 17a,17b provided in a right end part on a front end side of a driving part floor 16; and a brake operation tool 18 and a PTO selection lever 19 each of which is in a shape of a lever and provided in the vicinity of the driver's seat 4a.

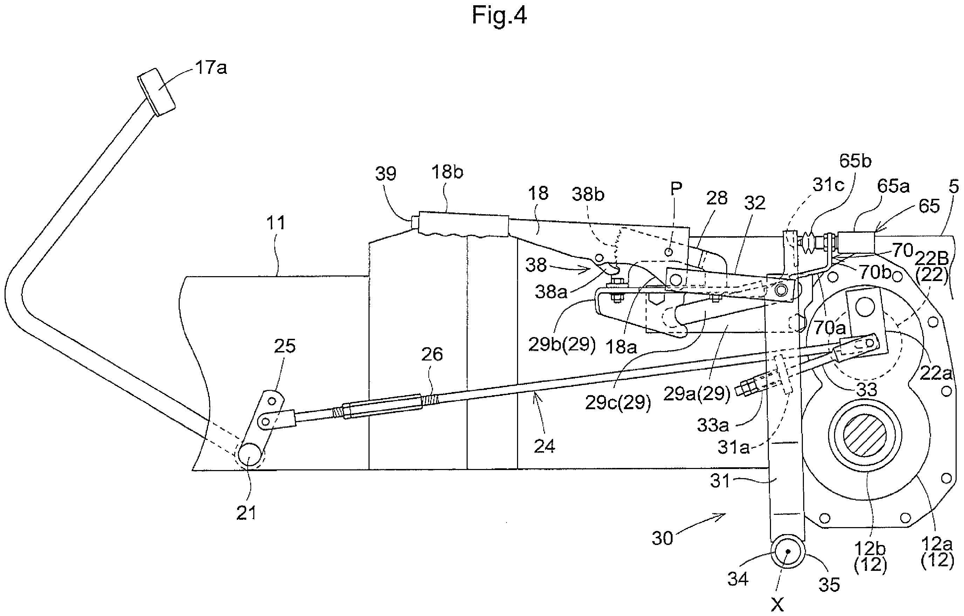

Fig. 3 is a plan view showing a structure for brake operation. Fig. 4 is a side view showing the structure for brake operation. As shown in these drawings, the left brake pedal 17a from between a pair of the right and left brake pedals 17a,17b is swingably supported on the main frame 11 through a shaft 21 which is extending in the transversal direction of the vehicle body and connected rotatably in a unified manner to a boss 20 of a pedal arm through a connecting pin 20a, The boss 20 of a pedal arm of the right brake pedal 17b from between a pair of the left and right brake pedals 17a,17b is relatively rotatably fitted onto the shaft 21, and the right brake pedal 17b is swingably supported on the main frame 11 through the shaft 21 and swingably operable independently of the left brake pedal 17a. A pedal 17c relatively rotatably supported on the shaft 21 is for operating a main clutch (not shown).

The (left and right) brake pedals 17a,17b separately interlock with respective (left and right) swing arm-shaped operation parts 22a of respective (left and right) traveling brakes 22,22 provided inside the transmission case 5 through respective (left and right) traveling brake interlocking mechanisms 24,24. Each of the (left or right) traveling brake 22 independently exerts a braking action on the corresponding (left or right) rear axle to separately apply brake on the corresponding (left or right) rear wheel 2.

The traveling brake interlocking mechanism 24 corresponding to the left brake pedal 17a includes: a swing arm 25 provided rotatably in a unified manner on an end part of the shaft 21 which is opposite to the end part to which the brake pedal 17a is connected; and a corresponding interlocking rod 26 which extends in the longitudinal direction of the vehicle body, whose front end part is relatively rotatably connected to a free end side of the corresponding swing arm 25 and whose rear end part is relatively rotatably connected to the operation part 22a of the corresponding traveling brake 22 through a joint. The interlocking rod 26 is disposed on a left outer side of the main frame 11 and extends under the driving part floor 16.

The traveling brake interlocking mechanism 24 corresponding to the right brake pedal 17b includes: the swing arm 25 provided rotatably in a unified manner on the boss 20 of the brake pedal 17b; and the corresponding interlocking rod 26 which extends in the longitudinal direction of the vehicle body, whose front end part is relatively rotatably connected to a free end side of the corresponding swing arm 25 and whose rear end part is relatively rotatably connected to the operation part 22a of the corresponding traveling brake 22 through the joint. The interlocking rod 26 is disposed on a right outer side of the main frame 11 and extends under the driving part floor 16.

Accordingly, by depressing the left brake pedal 17a, the left traveling brake 22 can be put to an on-state so as to apply brake on the left rear wheel 2. By depressing the right brake pedal 17b, the right traveling brake 22 can be put to an on-state so as to apply brake on the right rear wheel 2.

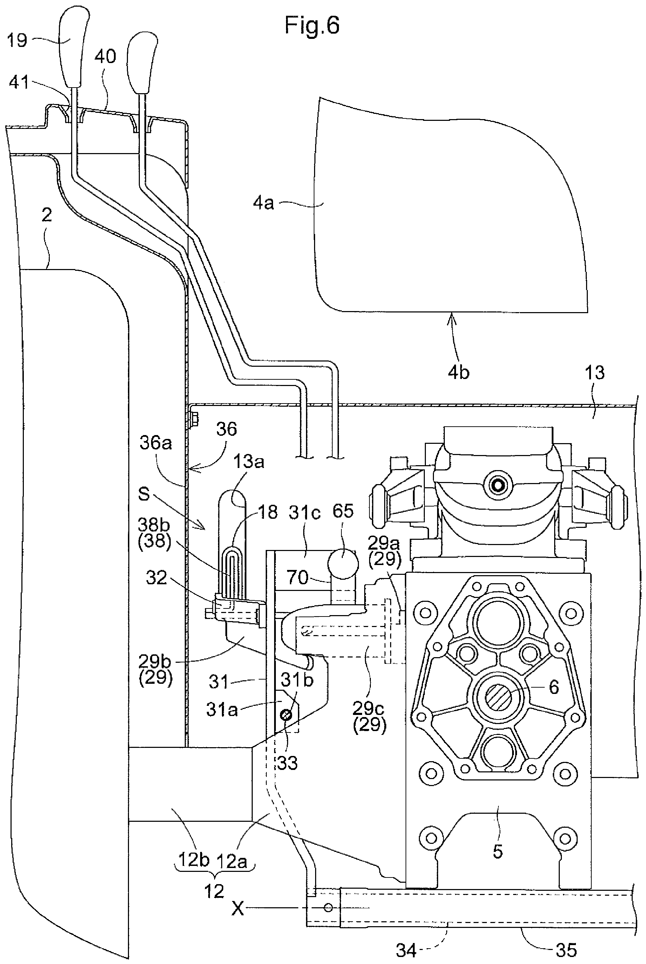

As shown in Figs. 3, 4 and 6, a mounting member 28 is fixed to a support part 29 provided on the lateral side of the transmission case 5 inside a transmission case cover 13 forming a seat supporting stage, and is connected relatively rotatably about an operation axis P to a base part of the brake operation tool 18. The brake operation tool 18 passes through a through hole 13a formed in the transmission case cover 13, and is operable swingably in a vertical direction about the operation axis P by a grip 18b disposed outside of the transmission case cover 13. As shown in Figs. 3, 4 and 7, the support part 29 for supporting the brake operation tool 18 on a transmission case 5-side includes: a plate member forming a connection seat 29a detachably connected to the transmission case 5 by connecting bolts; a plate member forming an operation tool support part 29b to which the mounting member 28 of the brake operation tool 18 is connected; and a bent rod in a shape of U when seen from above which serves as a connection body 29c connecting the connection seat 29a and the operation tool support part 29b.

As shown in Figs. 3 and 4, the brake operation tool 18 is connected to the operation parts 22a of a pair of the right and left traveling brakes 22,22 through an interlocking mechanism 30.

As shown in Figs. 3, 4 and 6, the interlocking mechanism 30 includes: a pair of right and left swing interlocking members (moving bodies) 31,31 flanking the transmission case 5; an interlocking body 32 made of sheet metal for connecting a free end side of one of the swing interlocking members 31 to an arm part 18a of the brake operation tool 18; a pair of right and left interlocking rods 33,33 each of which includes a round bar for independently interlocking a free end side of the corresponding (right or left) swing interlocking member 31 with the operation part 22a of the corresponding (right or left) traveling brake 22; and the single shaft 34 which is extending in the transversal direction of the vehicle body and connected rotatably in a unified manner to base parts of a pair of the right and left swing interlocking members 31,31. In other words, since the interlocking mechanism 30 for transmitting the operational displacement of the brake operation tool 18 to the parking brake 22B is disposed along a lateral side of the transmission case 5, the space is effectively utilized and protection of the interlocking mechanism 30 against external environment is improved.

The shaft 34 of a pair of the right and left swing interlocking members 31,31 is rotatably supported on a support part 35 formed of a cylindrical body which is provided on the main frame 11 and extending in the transversal direction of the vehicle body under the transmission case 5. A pair of the right and left swing interlocking members 31,31 are supported swingably in the longitudinal direction of the vehicle body about a swing axis X of the shaft 34, each of which is disposed at a position between the transmission case 5 and a corresponding rear wheel fender 36 located on a corresponding side of the transmission case 5 and frontward of the rear wheel drive case 12 in the longitudinal direction of the vehicle body.

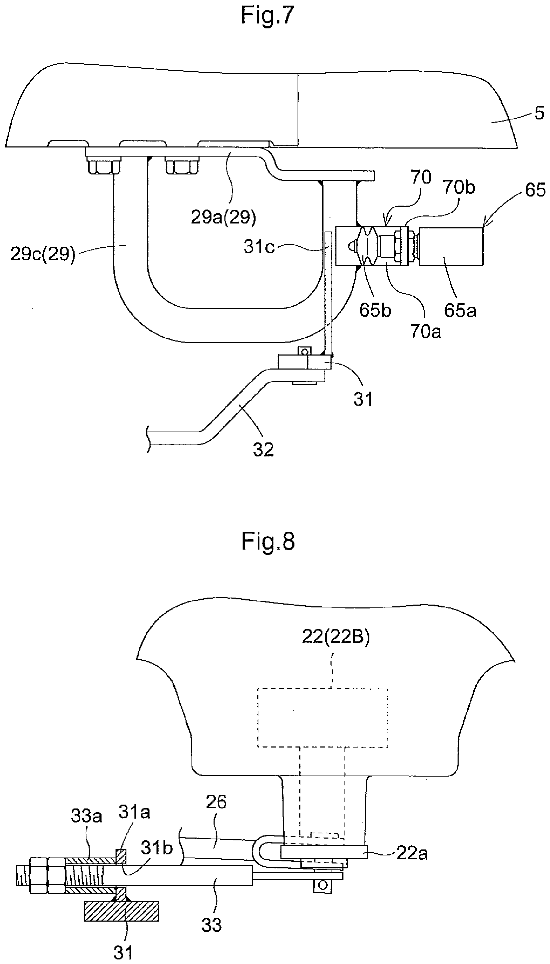

For connecting the left swing interlocking member 31 and the interlocking rod 33, as shown in Fig. 8, the interlocking rod 33 is slidably inserted into a through hole 31b formed in a connecting portion 31a as a plate body provided on the swing interlocking member 31, and a receiving part 33a as a cylindrical body attached to an end part of the interlocking rod 33 extending frontward of the connecting portion 31a, The same connection structure applies to a connection structure between the right swing interlocking member 31 and the corresponding interlocking rod 33.

In other words, the swing interlocking member 31 and the interlocking rod 33 are connected in such a manner that, when the swing interlocking member 31 is operated to swing frontward ("brake-on" side), the connecting portion 31a of the swing interlocking member 31 is brought into contact with the receiving part 33a and the swing interlocking member 31 pulls frontward the interlocking rod 33. The swing interlocking member 31 and the interlocking rod 33 are connected in such a manner that, when the brake pedals 17a,17b are depressed, in conjunction with the interlocking rod 26, the interlocking rod 33 moves through the through hole 31b frontward relatively to the swing interlocking member 31 so as to allow the operation of the brake pedals 17a,17b to put the traveling brake 22 into the on-state.

Fig. 5 is a side view illustrating the on-state of the traveling brake 22 made by the brake operation tool 18. As shown in this drawing, when the brake operation tool 18 is operated in an upward direction about the operation axis P, the interlocking body 32 is pulled and swingably frontward operate the first swing interlocking member 31 on the same side of the vehicle body. In conjunction with the first swing interlocking member 31, the second swing interlocking member 31 on the other side is swung frontward. The interlocking rod 33 connected to the first swing interlocking member 31 is pulled by the first swing interlocking member 31, and the operation part 22a of the traveling brake 22 on this side is swung to the "brake-on" side. The interlocking rod 33 connected to the second swing interlocking member 31 on the other side is pulled by the second swing interlocking member 31, and the operation part 22a of the traveling brake 22 on the other side is swung to the "brake-on" side. In this case, a latchet claw 38a of a ratchet type lock mechanism 38 provided between the brake operation tool 18 and the mounting member 28 engages with a portion in a serrated part of a locking body 38b corresponding to an operation position of the brake operation tool 18 to put the lock mechanism 38 into a locking state in which the brake operation tool 18 is fixed at a "brake-on" position and a pair of the right and left traveling brakes 22,22 are kept in the on-state against a returning force to the off-state.

Therefore, a pair of the right and left traveling brakes 22,22 serve as a parking brake 22B, and by operating the brake operation tool 18 swingably in the upward direction about the operation axis P, a pair of the right and left parking brakes 22B,22B are put into the on-state in which the parking brake is applied on a pair of the right and left rear wheels 2,2.

By a push operation of an unlock button 39 provided on a head part of the brake operation tool 18, the lock mechanism 38 cancels the engagement of the latchet claw 38a relative to the serrated part of the locking body 38b, to be in a lock cancel state.

Therefore, while the lock mechanism 38 is put into the lock cancel state by the push operation of the unlock button 39, when the brake operation tool 18 is swingably operated in a downward direction about the operation axis P, a pair of the right and left swing interlocking members 31,31 are swung rearward ("brake-off" side). As the result, the interlocking rod 33 connected to the swing interlocking member 31 is loosened and the operation part 22a of the parking brake 22B is swung to the "brake-off" side by a returning force thereof, putting a pair of the right and left parking brakes 22B,22B into the off-state.

The PTO selection lever 19 is interlocked with a speed change operation part of a working speed changer (not shown) provided inside the transmission case 5, so as to allow variable speed drive of the mid PTO 7 and the rear PTO 6.

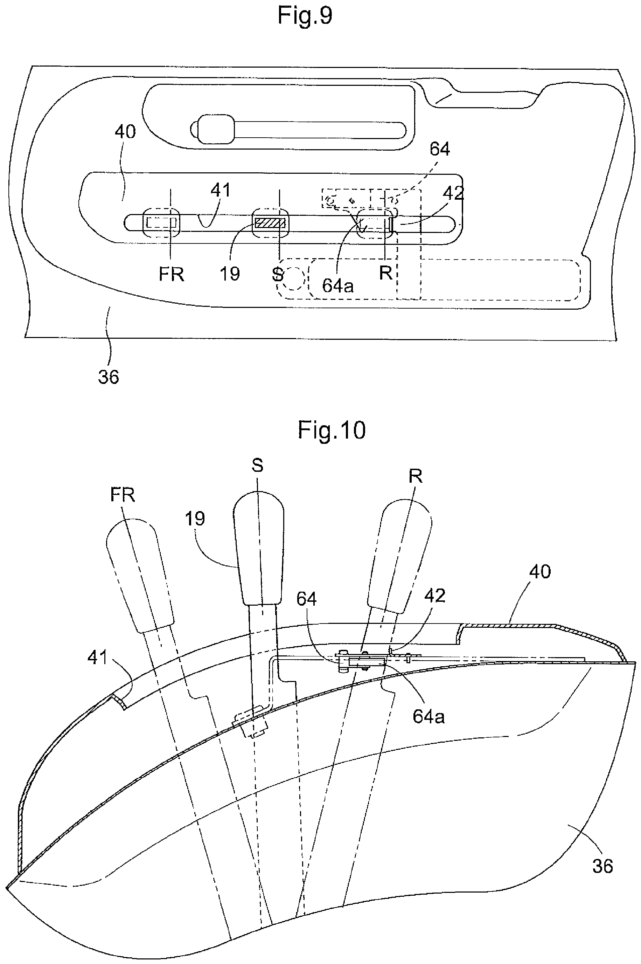

Fig. 9 is a plan view showing operation positions of the PTO selection lever 19. Fig. 10 is a side view showing the operation positions of the PTO selection lever 19. As shown in these drawings, the PTO selection lever 19 is supported in such a manner that it is operable swingably in the longitudinal direction of the vehicle body along a guide trench 41 of a lever guide 40 provided in the rear wheel fender 36 and switchable among a front-rear working position FR, a stop position S and a rear working position R. When the PTO selection lever 19 is operated to the front-rear working position FR, the working speed changer (not shown) is put into a speed change state in which a power is transmitted to the mid PTO 7 and the rear PTO 6, and the mid PTO 7 and the rear PTO 6 become drivable at a predetermined rotational rate. When the PTO selection lever 19 is operated to the stop position S, the working speed changer is put into a neutral state in which the power transmission to the mid PTO 7 and the rear PTO 6 is stopped and the driving of the mid PTO 7 and the rear PTO 6 becomes impossible. When the PTO selection lever 19 is operated to the rear working position R, the working speed changer is put into a speed change state in which the power transmission to the mid PTO 7 is stopped but a power is transmitted to the rear PTO 6 and thus the rear PTO 6 becomes drivable while the mid PTO 7 is stopped. In this case, the rotational rate of the rear PTO 6 becomes lower as compared with a case where the PTO selection lever 19 is at the front-rear working position FR.

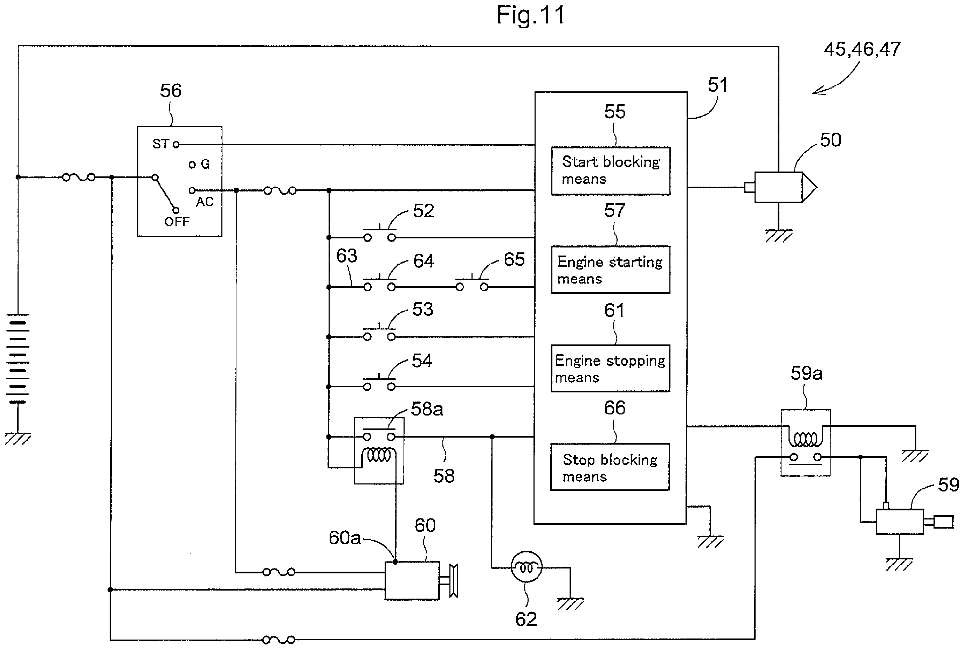

The self-propelled vehicle includes: an engine start blocking device 45; an engine automatic stopping device 46; and an engine stop blocking device 47. Fig. 11 is an electric circuit diagram showing the engine start blocking device 45, the engine automatic stopping device 46 and the engine stop blocking device 47. Referring to this drawing, the engine start blocking device 45 includes: a controller 51 coordinated with an engine starter 50; a working clutch detection switch 52 coordinated with the controller 51; a seat detection switch 53; and a running speed change detection switch 54.

The working clutch detection switch 52 is for detecting an off-state of a working clutch (not shown) which is provided inside the transmission case 5 and configured to connect and disconnect a power transmission from the engine 3a to the mid PTO 7 and the rear PTO 6, and outputting the detection result to the controller 51. The seat detection switch 53 is for detecting a seated state of the driver's seat 4a and outputting the detection result to the controller 51. The running speed change detection switch 54 is for detecting a neutral state of a running speed changer (not shown) which is provided inside the transmission case 5 and is configured to allow variable speed drive of the front wheels 1 and the rear wheels 2, and outputting the detection result to the controller 51.

The controller 51 utilizes a microcomputer and includes a start blocking means 55. In a case where the start blocking means 55 detects a driving operation of the engine starter 50 based on information from a main switch 56, if the start blocking means 55 determines that the working clutch is not in the off-state based on detection information from the working clutch detection switch 52, or if determines that the driver's seat 4a is not in the seated state based on detection information from the seat detection switch 53, or if determines that the running speed changer is not in the neutral state based on detection information from the running speed change detection switch 54, the start blocking means 55 blocks the driving of the engine starter 50 by an engine starting means 57; and if the start blocking means 55 determines that the working clutch is in the off-state, that the driver's seat 4a is in the seated state and that the running speed changer is in the neutral state, the start blocking means 55 allows the driving of the engine starter 50 by the engine starting means 57.

Therefore, when the working clutch is operated into the off-state, the running speed changer is operated into the neutral state, and further a worker is seated on the driver's seat 4a, the engine start blocking device 45 is not actuated, and by operating the main switch 56 to an engine start position, the engine 3a can be started. However, even though the working clutch is in the off-state and the running speed changer is in the neutral state, but if the worker is not seated on the driver's seat 4a, the engine start blocking device 45 is actuated and thus the engine 3a never starts even by the operation of the main switch 56 to the engine start position. Even through the worker is seated on the driver's seat 4a, but if the working clutch is kept in the on-state or the running speed changer is kept in a transmitting state, the engine start blocking device 45 is actuated and thus the engine 3a never starts even by the operation of the main switch 56 to the engine start position.

The engine automatic stopping device 46 includes: the controller 51; the seat detection switch 53; an engine detection circuit 58 coordinated with the controller 51; and a key stop solenoid 59.

The engine detection circuit 58 includes a relay switch 58a coordinated with an L-terminal 60a of an alternator 60. The relay switch 58a is switched to an on-state when the engine 3a is not running and there is a current flow in the L-terminal 60a, while switched to an off-state when the engine 3a is running and there is no current flow in the L-terminal 60a. To put it another way, with using the relay switch 58a, the engine detection circuit 58 detects that the engine 3a is running based on the absence of current in the L-terminal 60a, and outputs this detection result to the controller 51.

The controller 51 includes an engine stopping means 61. The engine stopping means 61 is configured to determine whether or not the driver's seat 4a is in the seated state, based on the detection information from the seat detection switch 53. When it is determined that the driver's seat 4a is not in the seated state, and determined that the engine 3a is running based on detection information from the engine detection circuit 58, an operation switch 59a formed of a relay switch of the key stop solenoid 59 is turned on to actuate the key stop solenoid 59. When actuated, the key stop solenoid 59 switches the key switch to an engine stop position to stop the engine 3a. A charge lamp 62 is parallelly connected to the engine detection circuit 58.

Therefore, when the worker leaves the driver's seat 4a with the engine 3a running, the engine automatic stopping device 46 is actuated and stops the engine 3a.

The engine stop blocking device 47 includes: the controller 51; and a detection circuit 63 coordinated with the controller 51. The detection circuit 63 includes: a PTO selection switch 64; and a detection switch 65 for the parking brake.

The detection switch 65 for the parking brake is configured to detect the on-state of the parking brake 22B and output the detection result to the controller 51.

As shown in Figs. 9 and 10, the PTO selection switch 64 is provided on a back face of the lever guide 40 for the PTO selection lever 19. When the PTO selection lever 19 is shifted to the rear working position R, a detection body 64a is brought into contact with the PTO selection lever 19 and pressed, to thereby switch the PTO selection switch 64 into the on-state. Based on the operation position of the PTO selection lever 19, it is detected whether or not the rear PTO 6 is in a drivable state, and the detection result is output to the controller 51. The detection body 64a of the PTO selection switch 64 overlaps an operation pathway of the PTO selection lever 19 so as to be visually checked through the guide trench 41 of the lever guide 40, and the switching can be easily visually checked through confirming whether or not the PTO selection switch 64 is brought into contact with the PTO selection lever 19. In the operation pathway of the PTO selection lever 19, a stopper 42 is disposed. Since the stopper 42 provides the positioning of the PTO selection lever 19 at the rear working position R, the PTO selection lever 19 can be shifted to the rear working position R with high precision, and at the same time, the PTO selection switch 64 can perform detection with high precision.

The controller 51 includes a stop blocking means 66. The stop blocking means 66 is configured to determine whether or not the rear PTO 6 is in the drivable state based on detection information from the PTO selection switch 64, and whether or not the parking brake 22B is in the on-state based on detection information from the detection switch 65 for the parking brake, and to block the actuation of the engine stopping means 61 when it is determined that the rear PTO 6 is in the drivable state and at the same time the parking brake 22B is in the on-state,

Therefore, for example, in a case where the rear PTO 6 drives a vehicle wash pump, by operating the PTO selection lever 19 to the rear working position R, even when the worker leaves the driver's seat 4a, the engine stop blocking device 47 is actuated and the engine automatic stopping device 46 is not actuated, and thus the engine 3a is kept running.

As shown in Figs. 3, 6 and 7, the detection switch 65 for the parking brake is disposed at a position above the rear wheel drive case 12 extending from the transmission case 5, inside relative to a vertical wall (downward extending wall) 36a of the rear wheel fender 36 in the transversal direction of the vehicle body, at a lower height level than that of a lower end 4b of the driver's seat 4a, rearward of the swing interlocking member 31 of the interlocking mechanism 30. The detection switch 65 is configured to detect the on-state of the parking brake 22B based on a swing position of the swing interlocking member 31. In other words, the detection switch 65 for detecting the movement of the swing interlocking member 31 configured to move in accordance with the operational displacement in the interlocking mechanism 30 is disposed in a space S having right and left lateral faces and a bottom face defined by the vertical wall 36a of the rear wheel fender 36, the transmission case 5 and the rear wheel drive case 12.

Specifically, as shown in Figs. 4 and 7, the detection switch 65 includes a case portion 65a and a detecting portion 65b in a shape of a pin provided frontward of the case portion 65a, and is supported by the connection body 29c of the support part 29 of the transmission case 5 through a mounting member 70 in such a manner that the detecting portion 65b is positioned in a moving pathway of a detected portion 31c in a shape of a vertical plate which is provided to a free end part (upper end part) of the swing interlocking member 31 and extending inward of the vehicle body.

Figs. 5 and 7 illustrate a detecting state of the detection switch 65. As shown in these drawings, when the swing interlocking member 31 is put at a swing position corresponding to the on-state of the parking brake 22B and the detected portion 31c of the swing interlocking member 31 is away from the detecting portion 65b of the detection switch 65 to cancel a push operation by the detected portion 31c to the detecting portion 65b, a switching mechanism (not shown) disposed inside the case portion 65a is switched to the on-state, and the detection switch 65 is put into the detecting state. The detection switch 65 is disposed as close to the center of the vehicle body as possible so as to overlap the base end side case 12a when seen as a planar view and as high above the support part 29 as possible, in order to prevent mud or grass from attaching or contacting to the detection switch 65.

Fig. 4 illustrates a non-detecting state of the detection switch 65. As shown in this drawing, when the swing interlocking member 31 is put at a swing position corresponding to the off-state of the parking brake 22B and the detected portion 31c of the swing interlocking member 31 is brought into contact with the detecting portion 65b of the detection switch 65 to push the detecting portion 65b, the switching mechanism disposed inside the case portion 65a is switched to the off-state, and the detection switch 65 is put to the non-detecting state.

As shown in Figs. 4 and 7, the mounting member 70 for the detection switch 65 includes: a support piece 70a extending rearward and obliquely upward relative to the vehicle body under the detecting portion 65b of the detection switch 65 from the connection body 29c of the support part 29 on the transmission case 5; and a connecting piece 70b which is standing on a distal end of the support piece 70a and connected to the case portion 65a of the detection switch 65. Therefore, the mounting member 70, especially the support piece 70a, blocks mud or grass so as to prevent them from attaching or contacting to the detecting portion 65b of the detection switch 65.

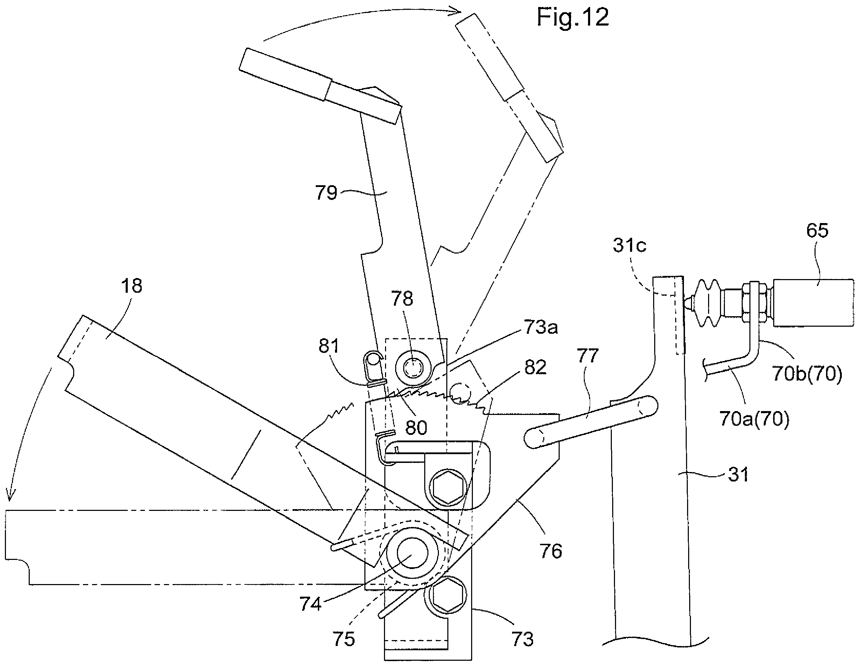

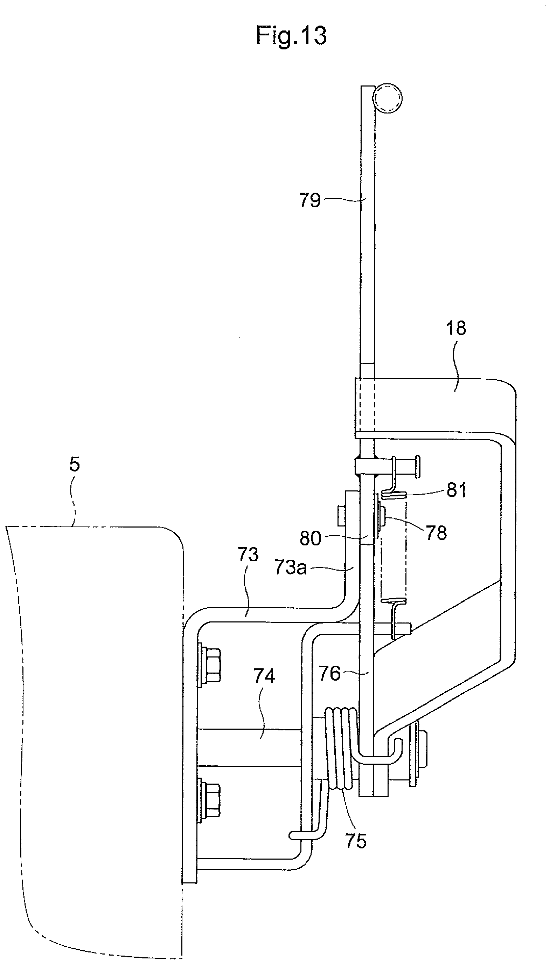

Fig. 12 is a side view showing the brake operation tool 18 according to another embodiment. Fig. 13 is a front view showing the brake operation tool 18 according to another embodiment. As shown in these drawings, the brake operation tool 18 according to another embodiment includes a brake pedal swingably supported on a shaft 74 attached to the lateral side of the transmission case 5 through a supporting member 73,

The brake operation tool 18 is biased to return to the "brake-off" position by a return spring 75 attached to the shaft 74. The brake operation tool 18 is provided with a positioning body 76 connected rotatably in a unified manner to the base part of the brake operation tool 18, and is interlocked with the swing interlocking member 31 through the positioning body 76 and an interlocking body 77 that connects the positioning body 76 to the swing interlocking member 31.

When depressed to the "brake-on" position, the brake operation tool 18 is locked at the "brake-on" position by a locking lever 79 swingably supported on an upper end part 73a of the supporting member 73 through a shaft 78, and the parking brake 22B is kept in the on-state.

In other words, the locking lever 79 has a latchet claw 80 formed integrally with a base part thereof. When the locking lever 79 is swingably biased by a locking spring 81, the latchet claw 80 is engaged with a serrated part 82 provided in the positioning body 76, to thereby lock the brake operation tool 18 at the "brake-on" position.

When swingably operated about the shaft 78 against the locking spring 81, the locking lever 79 releases the latchet claw 80 from the serrated part 82 to allow the brake operation tool 18 to be raised and return to the "brake-off" position.

### <Other embodiments>

(1) In the embodiment described above, the traveling brake is used as the parking brake 22B. Alternatively, a parking brake specialized exclusively for parking may be used.
(2) In the embodiment described above, the swing interlocking member 31 is disposed frontward of the rear wheel drive case 12. Alternatively, it may be disposed rearward of the rear wheel drive case 12.
(3) In the embodiment described above, the detection switch 65 is used which is configured to be switched to the on-state when the on-state of the parking brake 22B is detected. Alternatively, the detection switch 65 may be configured so that it is switched to the off-state when the on-state of the parking brake 22B is detected.
(4) In the embodiment described above, the detection switch 65 is configured to be brought into contact with the swing interlocking member 31. Alternatively, the detection switch 65 may be of a contactless type.
(5) In the embodiment described above, the detection switch 65 is disposed at the height level lower than that of the driver's seat 4a. Alternatively, it may be disposed at the same height level of the driver's seat 4a, at the position between the driver's seat 4a and the rear wheel fender 36.
(6) In the embodiment described above, the tractor was illustrated as one example of the work vehicle. Alternatively, the present invention is applicable to various work vehicles other than the tractor, such as mower, rice transplanter, combine and front loader.

The present invention is applicable to a work vehicle having a detection switch for detecting the operation state of the parking brake so as to block the actuation of the engine automatic stopping device. The present invention is also applicable to a work vehicle which has a detection switch for detecting the operating state of the parking brake for different purposes, e.g. detection switch for detecting the operating state of the parking brake so as to control a display for displaying the operating state of the parking brake.

### Description of reference characters

- 2: Rear wheel
- 4a: Driver's seat
- 5: Transmission case
- 12: Rear wheel drive case
- 18: Brake operation tool
- 22B: Parking brake
- 22a: Operation part of parking brake
- 29: Support part
- 30: Interlocking mechanism
- 31: Swing interlocking member (moving body)
- 36: Rear wheel fender
- 36a: Vertical wall
- 65: Detection switch (detector)
- 65a: Case portion of detection switch
- 65b: Detecting portion of detection switch (detecting head)
- 70: Mounting member
- 70a: Support piece of mounting member
- 70b: Connecting piece of mounting member

## Claims

1. A work vehicle comprising:
a transmission case (5) forming a vehicle body;
a driver's seat (4a) provided above the transmission case (5);
a rear wheel drive case (12) extending outward in a transversal direction of the vehicle body from the transmission case (5);
a rear wheel (2) disposed on an end part of the rear wheel drive case (12);
a rear wheel fender (36) which is provided on a lateral side of the driver's seat, extends in a longitudinal direction of the vehicle body above the rear wheel (2), and has a vertical wall extending toward the rear wheel drive case (12) along an inner face of the rear wheel (2);
a parking brake (22B) provided in the transmission case (5); and
a brake operation tool (18) for operating the parking brake (22B), provided in the vicinity of the driver's seat,
**characterized in that**
an interlocking mechanism (30) for transmitting an operational displacement of the brake operation tool (18) to the parking brake (22B) is disposed along a lateral face of the transmission case (5), and
a parking brake detector (65) for detecting a movement of a moving body (31) configured to move in accordance with the operational displacement of the brake operation tool (18) in the interlocking mechanism (30) is disposed in a space (S) having right and left lateral faces and a bottom face defined by the rear wheel fender (36), the transmission case (5) and the rear wheel drive case (12), the space (S) being positioned on one lateral side of the driver's seat (4a).

2. The work vehicle according to claim 1, **characterized in that** the moving body (31) is a swing interlocking member (31) swingable in the longitudinal direction of the vehicle body in accordance with the operational displacement.

3. The work vehicle according to claim 1 or 2, **characterized in that** the interlocking mechanism (30) and the parking brake detector (65) are supported on the transmission case (5).

4. The work vehicle according to any one of claims 1 to 3, **characterized in that** the parking brake detector (65) and the brake operation tool (18) are supported on the transmission case (5) through a same support part (29).

5. The work vehicle according to claim 4, **characterized in that** a mounting member (70) for fixing the parking brake detector (65) to the support part (29) comprises: a support piece (70a) extending under a detecting head (65b) of the parking brake detector (65) from the support part (29); and a connecting piece (70b) which is standing on a distal extending end of the support piece (70a) and is connected to a case portion (65a) of the parking brake detector (65).

6. The work vehicle according to any one of claims 1 to 5, **characterized in that** the parking brake detector (65) is a contact type detection switch (65), and when the parking brake (22B) is in an off-state, the moving body (31) is brought into contact with a detecting head (65b) of the detection switch (65), and when the parking brake (22B) is in an on-state, the moving body (31) is away from the detecting head (65b) of the detection switch (65).

## Patentansprüche

1. Arbeitsfahrzeug, aufweisend:
ein Getriebegehäuse (5), das eine Fahrzeugkarosserie bildet;
einen Fahrersitz (4a), der über dem Getriebegehäuse (5) angeordnet ist;
ein Hinterradantriebsgehäuse (12), das sich in einer transversalen Richtung der Fahrzeugkarosserie von dem Getriebegehäuse (5) nach außen erstreckt;
ein Hinterrad (2), das an einem Endabschnitt des Hinterradantriebsgehäuses (12) angebracht ist;
ein Hinterrad-Schutzblech (36), das an einer lateralen Seite des Fahrersitzes angebracht ist, sich in einer longitudinalen Richtung der Fahrzeugkarosserie über das Hinterrad (2) erstreckt und eine vertikale Wand aufweist, die sich in Richtung des Hinterradantriebsgehäuses (12) entlang einer inneren Seitenfläche des Hinterrades (2) erstreckt;
eine Feststellbremse (22B), die in dem Getriebegehäuse (5) angebracht ist; und
ein Bremsbetätigungswerkzeug (18) zur Betätigung der Feststellbremse (22B), das in der Nähe des Fahrersitzes (4a) angebracht ist,
**dadurch gekennzeichnet, dass**
ein Koppelmechanismus (30) zur Übertragung einer Betätigungs-Verschiebung des Bremsbetätigungswerkzeugs (18) an die Feststellbremse (22B) entlang einer Seitenfläche des Getriebegehäuses (5) angeordnet ist, und
ein Feststellbremsen-Detektor (65) zum Erkennen einer Bewegung eines sich bewegenden Körpers (31), der so gestaltet ist, dass er sich in Übereinstimmung mit der Betätigungs-Verschiebung des Bremsbetätigungswerkzeugs (18) in dem Koppelmechanismus (30) bewegt, in einem Raum (S) angeordnet ist,, welcher Raum rechte und linke Seitenflächen und eine Bodenfläche aufweist, die durch das Hinterrad-Schutzblech (36), das Getriebegehäuse (5) und das Hinterradantriebsgehäuse (12) definiert sind, wobei der Raum (S) an einer lateralen Seite des Fahrersitzes (4a) angeordnet ist.

2. Arbeitsfahrzeug nach Anspruch 1, **dadurch gekennzeichnet, dass** der sich bewegende Körper (31) ein Schwenk-Koppel-Bauteil (31) ist, das in der longitudinalen Richtung der Fahrzeugkarosserie in Übereinstimmung mit der Betätigungs-Verschiebung schwenkbar ist.

3. Arbeitsfahrzeug nach Anspruch 1 oder 2, **dadurch gekennzeichnet, dass** der Koppelmechanismus (30) und der Feststellbremsen-Detektor (65) an dem Getriebegehäuse (5) gelagert sind.

4. Arbeitsfahrzeug nach einem der Ansprüche 1 bis 3, **dadurch gekennzeichnet, dass** der Feststellbremsen-Detektor (65) und das Bremsbetätigungswerkzeug (18) durch ein gleiches Stütz-Bauteil (29) an dem Getriebegehäuse (5) gelagert sind.

5. Arbeitsfahrzeug nach Anspruch 4, **dadurch gekennzeichnet, dass** ein Montageelement (70) zum Befestigen des Feststellbremsen-Detektors (65) an dem Stütz-Bauteil (29) aufweist: ein Auflagestück (70a), das sich von dem Stütz-Bauteil (29) unter einen Detektorkopf (65b) des Feststellbremsen-Detektors (65) erstreckt; und ein Verbindungsstück (70b), welches auf einem sich distal erstreckenden Ende des Auflagestücks (70a) steht und mit einem Gehäuseteil (65a) des Feststellbremsen-Detektors (65) verbunden ist.

6. Arbeitsfahrzeug nach einem der Ansprüche 1 bis 5, **dadurch gekennzeichnet, dass** der Feststellbremsen-Detektor (65) ein Kontakttyp-Detektionsschalter (65) ist und dass, wenn die Feststellbremse (22B) in einem Aus-Zustand ist, der sich bewegende Körper (31) in Kontakt mit einem Detektorkopf (65b) des Detektionsschalters (65) gebracht wird und dass, wenn die Feststellbremse (22B) in einem An-Zustand ist, der sich bewegende Körper (31) von dem Detektorkopf (65b) des Detektionsschalters (65) entfernt ist.

## Revendications

1. Véhicule de travail comprenant :
un carter de transmission (5) formant un corps de véhicule ;
un siège de conducteur (4a) prévu au-dessus du carter de transmission (5) ;
un carter d'entraînement de roue arrière (12) s'étendant vers l'extérieur selon une direction transversale du corps de véhicule depuis le carter de transmission (5) ;
une roue arrière (2) disposée sur une partie d'extrémité du carter d'entraînement de roue arrière (12) ;
une aile de roue arrière (36) laquelle est prévue sur un côté latéral du siège de conducteur, s'étend selon une direction longitudinale du corps de véhicule au-dessus de la roue arrière (2), et présente une paroi verticale s'étendant en direction du carter d'entraînement de roue arrière (12) le long d'une face intérieure de la roue arrière (2) ;
un frein de stationnement (22B) prévu dans le carter de transmission (5) ; et
un outil d'actionnement de frein (18) destiné à enclencher le frein de stationnement (22B), prévu à proximité du siège de conducteur,
**caractérisé en ce que**
un mécanisme d'interverrouillage (30) destiné à transmettre un déplacement d'actionnement de l'outil d'actionnement de frein (18) au frein de stationnement (22B) est disposé le long d'une face latérale du carter de transmission (5), et
un détecteur de frein de stationnement (65) destiné à détecter un déplacement d'un corps mobile (31) configuré pour se déplacer conformément au déplacement d'actionnement de l'outil d'actionnement de frein (18) dans le mécanisme d'interverrouillage (30) est disposé dans un espace (S) ayant des faces latérales gauche et droite et une face de fond définies par l'aile de roue arrière (36), le carter de transmission (5) et le carter d'entraînement de roue arrière (12), l'espace (S) étant positionné sur un seul côté latéral du siège de conducteur (4a).

2. Véhicule de travail selon la revendication 1, **caractérisé en ce que** le corps mobile (31) est un élément d'interverrouillage oscillant (31) pouvant osciller selon la direction longitudinale du corps de véhicule conformément au déplacement d'actionnement.

3. Véhicule de travail selon la revendication 1 ou 2, **caractérisé en ce que** le mécanisme d'interverrouillage (30) et le détecteur de frein de stationnement (65) sont supportés sur le carter de transmission (5).

4. Véhicule de travail selon l'une quelconque des revendications 1 à 3, **caractérisé en ce que** le détecteur de frein de stationnement (65) et l'outil d'actionnement de frein (18) sont supportés sur le carter de transmission (5) via une même partie de support (29).

5. Véhicule de travail selon la revendication 4, **caractérisé en ce qu'**un élément de montage (70) destiné à fixer le détecteur de frein de stationnement (65) sur la partie de support (29) comprend : une pièce de support (70a) s'étendant sous une tête de détection (65b) du détecteur de frein de stationnement (65) depuis la partie de support (29) ; et une pièce de liaison (70b) laquelle se situe sur une extrémité distale de la pièce de support (70a) et est reliée à une partie de carter (65a) du détecteur de frein de stationnement (65).

6. Véhicule de travail selon l'une quelconque des revendications 1 à 5, **caractérisé en ce que** le détecteur de frein de stationnement (65) est un commutateur de détection de type à contact (65), et lorsque le frein de stationnement (22B) est dans un état non actif, le corps mobile (31) est amené au contact d'une tête de détection (65b) du commutateur de détection (65), et lorsque le frein de stationnement (22B) est dans un état actif, le corps mobile (31) est écarté de la tête de détection (65b) du commutateur de détection (65).
